# EUROPEAN PATENT SPECIFICATION

(11) **EP 3 235 887 B1**
(45) Date of publication and mention of the grant of the patent: **31.07.2019**
(21) Application number: 15869545.2
(22) Date of filing: 11.12.2015
(51) Int. Cl.: C09D 201/00, C09D 5/02, C10M 173/02, C10M 103/00, C10M 103/02, C10M 103/06, C10M 107/04, C10M 107/38, C10M 107/44, C10M 133/40, C10M 133/44, C10M 133/48, C10M 143/00, C10M 145/14, C10M 145/20, C10M 149/18, C10M 149/20, C10M 155/02, C10N 10/04

(54) **WATER-BASED COATING AGENT COMPOSITION, WATER-BASED LUBRICATING FILM PAINT COMPOSITION COMPRISING SAME, AND MEMBER**
WASSERBASIERTE BESCHICHTUNGSMITTELZUSAMMENSETZUNG, WASSERBASIERTE SCHMIERFILMLACKZUSAMMENSETZUNG DAMIT UND ELEMENT
COMPOSITION D'AGENT DE REVÊTEMENT À BASE D'EAU, COMPOSITION DE PEINTURE FORMANT UN FILM LUBRIFIANT À BASE D'EAU EN CONTENANT, ET ÉLÉMENT

(30) Priority: 15.12.2014 JP 2014253518
(43) Date of publication of application: 25.10.2017
(73) Proprietor: Dow Corning Toray Co., Ltd., Tokyo 100-0004 (JP)
(72) Inventor: SASAKI, Takahiko, Kanagawa 258-0112 (JP); YAMAGUCHI, Tetsuji, Kanagawa 258-0112 (JP)
(74) Representative: Murgitroyd & Company
(86) International application number: PCT/JP2015/006200
(87) International publication number: WO 2016/098336

(56) References cited:
- WO-A1-2014/021477
- JP-A- H10 110 093
- JP-A- 2005 349 684
- JP-A- 2006 143 988
- JP-A- 2007 161 765
- JP-A- 2009 242 711
- JP-A- 2011 089 074
- JP-A- 2012 219 183
- JP-A- 2014 047 293

## Description

### Technical Field

The present invention relates to an aqueous coating agent composition. Furthermore, the present invention relates to: a paint composition for an aqueous lubricating film which is an application of the aqueous coating agent composition; a member provided with a coating film or a lubricating film formed by curing the composition; and a method of forming the coating/lubricating film.

### Background Art

An aqueous paint or aqueous coating agent (hereinafter referred to as "aqueous coating agent") made by dispersing or emulsifying a curable resin in water contains an organic solvent as a film formation auxiliary agent so as to form a film even at a low temperature. In the aqueous coating agent composition, the curable resin is often dispersed or emulsified in an emulsion form, and there are cases where a pigment or a solid lubricant in a powder, paste, or dispersion form is mixed, and a surfactant is added for stabilizing the dispersion and preventing precipitation of the powder. The aqueous coating agents are coated and cured on a substrate of metal, rubber or plastic, and thereby a member having a desired coating film function can be obtained.

For example, Patent Documents 1 to 4 disclose a method of forming a lubricating film on a metal substrate surface, specifically, a cooled tube drawing method of a bare tube formed with a lubricating film, wherein a lubricating film can be formed on a bare tube by coating a composition wherein a curable resin such as a polyacrylic resin, fine particles such as solid lubricant, and wax particles are dispersed or suspended in a solvent containing water by using a surfactant, onto the bare tube by immersion, and passing the tube through a drying zone at 60 to 150°C, in order to form a lubricating film on the bare tube. Furthermore, in order to form a strong resin layer, Patent Documents 1 to 4 discloses that water or a solvent containing at least water is preferably used, and alcohols, ether solvents, acetate solvents, ketone solvents, hydroxyamines, and dimethylsulfoxide are examples of the solvent other than water, and a mixed solvent configured of water and the solvent other than water, a water-alcohol type solvent configured of water and alcohol are examples of the solvent containing at least water. Note that the surfactant is an optional component to disperse the resin and wax particles, and dodecylbenzene sulfonate is not specifically disclosed.

On the other hand, Patent Documents 1 to 4 disclose examples of the ketone solvent such as acetone, methyl ethyl ketone, methyl isobutyl ketone, 2-pyrrolidone, N-methyl-2-pyrrolidone, N-methyl-3-methyl-2-pyrrolidone, 1,3-dimethyl-2-imidazolidinone or N-N-dimethylformamide, but among these, using a mixed solvent of a heterocyclic compound containing nitrogen and water is not mentioned nor suggested. Furthermore, Patent Documents 1 to 4 disclose examples where there is no distinction between the heterocyclic compound containing nitrogen and a ketone solvent that generally causes emulsion destruction and destabilizes the aqueous coating agent composition, where a mixed solvent with acetone and water is formed as an example of a ketone solvent, and there is no mention whatsoever of a technical problem concerning the stability of the aqueous coating agent, and furthermore, there is no suggestion of any resolution means.

### Prior Art Documents

### Patent Documents

Patent Document 1: Japanese Unexamined Patent Application Publication No. 2007-268580
Patent Document 2: Japanese Unexamined Patent Application Publication No. 2007-268584
Patent Document 3: Japanese Unexamined Patent Application Publication No. 2007-268587
Patent Document 4: Japanese Unexamined Patent Application Publication No. 2006-143988 describes a lubricating coating film for plastic processing comprising a resin layer formed on a surface of a base material. The resin layer contains wax and also 25-99 wt% of a resin showing a glass transition temperature of 30°C or lower under 100 wt% of the resin layer, such as one or more of a (meth)acrylate resin, a urethane resin, a polyester resin, a vinyl alcohol resin, a polyamide resin and a fluorocarbon resin.

Japanese Patent Publication No. 2009 242711 describes a coating composition containing a fluorine-containing polymer, a heat-resistant resin and a water-soluble inorganic salt, wherein the fluorine-containing polymer is at least one selected from the group consisting of a polytetrafluoroethylene, a tetrafluoroethylene/hexafluoropropylene copolymer and a tetrafluoroethylene/perfluoro(alkyl vinyl ether) copolymer, and has an average particle size of 0.01-5 µm. The heat-resistant resin has an average particle size of 0.1-10.0 µm. The solid content mass ratio of the heat-resistant resin to the fluorine-containing polymer is from 15:85 to 50:50, and the proportion of the water-soluble inorganic salt to the total solid content of the fluorine-containing polymer and the heat-resistant resin is 0.0001-10 mass%.

Japanese Patent Publication No. 2005 349684 describes a resin-coated, surface-treated steel sheet having a resin membrane on the surface of a zinc-plated steel sheet or an aluminum-plated steel plate, the resin membrane formed from a coating composition containing an emulsion resin of a mixture of a silica-modified acrylic emulsion resin and an acrylic emulsion resin, a solid lubricant, and a cyclic organic compound having a mercapto group. The acrylic emulsion resin is a core-shell type emulsion resin in which the Tg of the outermost shell part of a particle is higher than the Tg of the central part of the particle, and the amount of the adherent resin membrane is 0.5-8.0 g/m². The coating composition can additionally contain 0.1-10 mass% of a phosphate and/or 0.1-10 mass% of a vanadate based on the total solid content of the composition.

### Summary of Invention

### Problem to be Solved by the Invention

On the other hand, the present inventors discovered a new technical problem with regards to the aqueous coating agent described above. In a conventionally known aqueous coating agent, the curable resin is an aqueous emulsion resin composition that is synthesized by emulsion polymerization or emulsifier (soap) free emulsion polymerization, , but when adding a surfactant in the system in order to stably disperse the solid particles of the solid lubricant, the curable resin in emulsion form and the surfactant interact with each other, and a surface condition of the curable resin is destabilized, thickening and gelling occur, and fluidity (in other words, coatability) can be greatly impaired. On the other hand, if the surfactant is not added, the solid particles of the solid lubricant form a precipitate in the aqueous coating agent, and preservation stability is impaired and the entire aqueous coating agent cannot be uniformly coated, and therefore there are cases where a coating film having the desired function cannot be obtained.

In view of the foregoing, an object of the present invention is to resolve the aforementioned problem by providing an aqueous coating agent composition, including: a curable resin emulsified or dispersed in water; and a surfactant for uniformly dispersing solid particles in water; where interaction between the curable resin and the surfactant is suppressed, the entire aqueous coating agent is suppressed from thickening, gelling, or becoming nonuniform, the overall fluidity, coatability, and storage stability is improved, and a favorable coating film can be formed. Furthermore, another object is to provide a member provided with the coating film, and a method of forming the coating film.

Furthermore, an object of the present invention is to provide a paint composition for an aqueous lubricating film by using a solid lubricant as at least a portion of the solid particles, that can form a film having high adhesion on the surface of various substrates by drying, low coefficient of friction, and sliding properties such as favorable wear resistance, thereby forming a lubricating film that can maintain excellent sliding properties over a long period of time. Furthermore, another object is to provide a lubricating film using the aforementioned paint composition for a lubricating film, a sliding member with this lubricating film, and a method of forming this lubricating film.

### Means for Solving the Problem

As a result of extensive studies in order to resolve the aforementioned problems, the present inventors discovered that the problems can be resolved by an aqueous coating agent compound containing: (A) a curable resin in an aqueous emulsion form; (B) a surfactant; (C) solid particles; (D) at least one type of heterocyclic compound containing nitrogen; and (E) water. Further, by blending of a solid lubricant as at least a portion of component (C), the inventors of the present invention achieved the present invention by discovery that excellent sliding characteristics are provided for the lubricating film formed on the substrate surface using the aforementioned composition, and that sliding durability is excellent.

In other words, a first object of the present invention is achieved by an aqueous coating agent composition, containing:
(A) a curable resin in an aqueous emulsion;
(B) a surfactant;
(C) solid particles;
(D) one or more nitrogen-containing heterocyclic compound; and
(E) water;
wherein the component (B) contains an anionic surfactant different from a surfactant used for the emulsion formation of the component (A), and the component (D) is 1,3-dimethyl-2-imidazolidinone.

The aqueous coating agent composition of the present invention preferably contains 0.1 to 50 parts by mass of component (B), 5 to 200 parts by mass of component (C), 1 to 20 parts by mass of component (D), and 50 to 1000 parts by mass of component (E) per 100 parts by mass of solid content of component (A) before a curing reaction.

Component (A) is more preferably a polyacrylic resin, polyurethane resin, polyolefin resin, epoxy resin, silicone resin, polyamide imide resin, in the form of an aqueous emulsion, or a modified product thereof or mixture thereof..

Component (C) preferably contains a solid lubricant selected from fluorine resins, polyethylene resins, polyamide resins, molybdenum disulfide, graphite, aluminum oxide, boron nitride, zinc oxide, and mixtures thereof. If the solid lubricant is included, the aqueous coating agent composition of the present invention can be suitably used as a paint composition for an aqueous lubrication coating.

The present invention relates to a coating formed by curing the aforementioned aqueous coating agent composition. Note that the coating film of the present invention may be used as a lubricating film.

The present invention relates to a member provided with a coating formed by curing the aforementioned aqueous coating agent composition. The member may be used as a sliding member.

The present invention relates to a method of coating the aforementioned aqueous coating agent composition onto a substrate surface to form a coating film on the substrate surface by drying and/or irradiating with a high energy beam. The method may be used in a method of forming a lubricating film on a substrate surface to manufacture a sliding member.

### Advantageous Effects of Invention

The aqueous coating agent of the present invention suppresses interaction between a curable resin in an aqueous emulsion form and a surfactant added in order to disperse solid particles. The entire aqueous coating agent is suppressed from thickening, gelling, or becoming nonuniform, and coatability and storage stability are improved. Therefore, the aqueous coating agent of the present invention can be stored over a long period of time, and can form a coating film with excellent uniformity, film physical properties, and adhesion to a substrate. Furthermore, the present invention can provide a member provided with the coating film, and a method of forming the coating film.

Furthermore, the present invention can provide a paint composition for an aqueous lubricating film by using a solid lubricant as at least a portion of the solid particles, that can form a film having high adhesion on the surface of various substrates by, low coefficient of friction, and sliding properties such as favorable wear resistance, thereby forming a lubricating film that can maintain excellent sliding properties over a long period of time. Furthermore, the present invention can provide a lubricating film using the aforementioned paint composition for a lubricating film, a sliding member with this lubricating film, and a method of forming this lubricating film.

Note that component (D) is also a component that functions as a film formation auxiliary agent, and therefore, a strong resin layer can be more easily formed as compared to a conventional coating agent composition, which is expected to improve adhesion and physical strength of a coating film or lubricating film and improve production efficiency. Furthermore, even when it is required to not use as component (D) an amide solvent such as N-methyl pyrrolidone (NMP) when considering the environment and the human body, by using a compound such as 1,3-dimethyl-2-imidazolidinone, an aqueous coating agent composition with excellent handling workability and stabilized fluidity can be provided using a solvent that is less likely to adversely affect the human body, and in particular, product design corresponding to European environmental regulations is possible.

### Description of Embodiments

A first embodiment of the present invention is an aqueous coating agent composition containing:
(A) a curable resin in the form of an aqueous emulsion;
(B) a surfactant;
(C) solid particles;
(D) one or more nitrogen-containing heterocyclic compounds; and
(E) water:
   wherein the component (B) contains an anionic surfactant different from a surfactant used for the emulsion formation of the component (A), and the component (D) is 1,3-dimethyl-2-imidazolidinone.

Each of the components will be described below.

### Component (A)

Component (A) is a curable resin in an aqueous emulsion form, is a main agent of the aqueous coating agent composition according to the present invention, forms a coating film by curing, and functions as a binder resin of solid particles. In particular, the curable resin in an aqueous emulsion form is a curable resin composition formed by dispersing a curable resin component which is a continuous phase, synthesized by emulsion polymerization or soap-free emulsion polymerization, and examples include polyacrylic resin, polyurethane resin, polyolefin resin, epoxy resin, silicone resin, polyamide imide resin, modified product thereof, or mixtures thereof.

Typically, the curable resin in the aqueous emulsion forms can be obtained by emulsifying or dispersing in water a polymerizable curable resin monomer or prepolymer in the presence or absence of a surfactant, and then emulsion polymerizing in water the monomer or prepolymer by heating. The curable resin obtained by emlusion polymerization is emulsified by the action of the surfactant or is made self-emulsifiable by introducing a hydrophilic group to the curable resin, and therefore has a form where ultrafine particles of curable resin are emulsified and dispersed in water, and generally exhibits a suspension or cloudy appearance.

Resin particles in the emulsion dispersed condition are in an aqueous emulsion form, and therefore, handling is generally easy, and a film can be formed simply by removing water by drying as compared to a formulation using an organic solvent, and therefore has an advantage of reducing the environmental load. On the other hand, the resin particles obtained by emulsion polymerization have high reactivity derived from unreacted monomer or residual reactive functional groups, and by mixing another component, and particularly a surfactant, or by mixing hydrophilic/hydrophobic solid particles, the uniform emulsified condition tends to be easily impaired. Specifically, nonuniformity occurs due to generation of coarse particles over time, and thickening or gelling of the resin emulsion occurs in conjunction with the advancement of a polymerization reaction between the resin particles.

The curable resin with an aqueous emulsion form can be synthesized by a conventionally known method, and is preferably a curable resin in an aqueous emulsion form obtained by emulsion polymerizing in water using a surfactant, and particularly an ionic surfactant. Furthermore, the particle size of the curable resin particles in the emulsion is not particularly limited, but the particle size (median diameter) determined by laser diffraction scattering method is preferably within a range of approximately 0.1 to 10 µm, and the appearance may be that of a cloudy liquid or suspended liquid form.

The polyacrylic resin in an aqueous emulsion form is in an aqueous emulsion or suspended polymerization liquid condition, and may be a homopolymer or copolymer so long as the resin is obtained by polymerizing one type or two or more types of an acrylic monomer. Furthermore, the structure and type is not particular limited. Examples of the acrylic monomers include one type or two or more types of: methyl (meth)acrylate, ethyl (meth)acrylate, isopropyl (meth)acrylate, n-butyl (meth)acrylate, 2-ethyl hexyl (meth)acrylate, octyl (meth)acrylate, and other alkyl (meth)acrylates (the number of carbon atoms in an alkyl group is preferably 1 to 8, more preferably 1 to 6, and particularly preferably 1 to 4); methoxy methyl (meth)acrylate, methoxy ethyl (meth)acrylate, ethoxy methyl (meth)acrylate, ethoxy ethyl (meth)acrylate, methoxy butyl (meth)acrylate, and other lower alkoxy lower alkyl (meth)acrylates; 2-hydroxy ethyl (meth)acrylate, 3-hydroxy propyl (meth)acrylate, and other hydroxy lower alkyl (meth)acrylates; acrylamides and methacrylamides; N-methylol acrylamide, N-methylol methacrylamide, N-butoxy methyl acrylamide, N-butoxy methyl methacrylamide, and other (meth)acrylamides having a N-unsubstituted or substituted (and particularly lower alkoxy substituted) methylol group; phosphonyloxy methyl (meth)acrylate, phosphonyloxy ethyl (meth)acrylate, phosphonyloxy propyl (meth)acrylate, and other phosphonyloxy lower alkyl (meth)acrylates; acrylonitrils; acrylic acids and methacrylic acids. Note that the aforementioned "lower alkoxy" and "lower alkyl" normally refer to an alkoxy and alkyl with 1 to 5 carbon atoms, and the number of carbon atoms is preferably 1 to 4, and more preferably 1 to 3.

Herein, in order to further improve adhesion with regard to various substrates, the polyacrylic resin may contain a (meth)acrylic acid compound with a (meth)acrylic equivalent of 100 or less, preferably 95 or less, and more preferably 90 or less as a component configuring a hard segment of a cured product thereof, and a (meth)acrylic acid compound with a (meth)acrylic equivalent of 120 to 300, preferably 130 to 270, and more preferably 150 to 250 as a component configuring a soft segment of the cured product, as well as other curable resins (such as a polyurethane resin). Use of the polyacrylic resin or mixture with another curable resin is as proposed by the present applicants in International Patent Application PCT/JP 14/061806.

The type of the polyurethane resin is not particularly limited, but a polyurethane resin formed by reacting at least one type of isocyanate with at least one type of polyol is preferred. Note that the polyurethane resin in an aqueous emulsion form may be self-emulsifiable by introducing a hydrophilic group, or may be in a form of an emulsion dispersed in water by an ionic surfactant, and particularly an anionic surfactant such as a carboxylic acid triethylamine salt.

The polyol is not particularly limited so long as at least 2 hydroxyl groups are provided in one molecule, and a conventionally known polyol may be used. Examples of the polyol include polyester polyols, polycarbonate polyols, polyether polyols, polycaprolactone polyols, polyalkylene polyols. A single type of the polyol may be used, or a combination of two or more types may be used.

Examples of the polyester polyol include polyester polyols produced by polycondensation of a polyvalent carboxylic acid and a polyol. Examples of polyvalent carboxylic acids include succinic acid, terephthalic acid, isophthalic acid, dodecanoic acid, 1,5-naphthalic acid, 2,6-naphthalic acid, succinic acid, glutaric acid, adipic acid, pimelic acid, suberic acid, azelaic acid, sebacic acid and dodecamethylene dicarboxylic acid. The polyvalent carboxylic acid is preferably a linear type dicarboxylic acid. The number of carbon atoms of the linear dicarboxylic acid is preferably greater than or equal to 4, and more preferably is 4 to 12. Furthermore, the number of carbon atoms of the linear carboxylic acid is particularly preferably an even number. Specific examples of this type of linear dicarboxylic acid include succinic acid, adipic acid, suberic acid, sebacic acid and dodeconic acid. Furthermore, examples of the polyol include propylene glycol, 1,3-propanediol, 1,4-butanediol, neopentylglycol, 1,5-pentanediol, 1,6-hexanediol, ethylene glycol, diethylene glycol and cyclohexanediol. The polycarboxylic acid and polyol may each be a single type, or may be a respective combination of two or more types. The hydroxyl value of the polyester polyol is preferably from 2 to 160 mgKOH/g.

The polycarbonate polyol is a compound having at least 2 hydroxyl groups and repeated units indicated by the formula -R-O(C=O)O- (within the formula, R indicates a divalent aliphatic or alicyclic hydrocarbon group of 2 to 5 carbon atoms), and examples include polyhexamethylene carbonate polyol and polycyclohexane dimethylene carbonate polyol.

The polycarbonate diol is a compound having at least 2 hydroxyl groups and the aforementioned repeating units within the molecule. Polycarbonate diols may be synthesized from aliphatic and/or alicyclic diols by various types of methods mentioned by Schell in Polymer Review, vol. no. 9, pp. 9-20 (1964). Preferred examples of the diol include ethylene glycol, 1,2-propanediol, 1,3-propanediol, 1,2-butanediol, 1,3-butanediol, 1,4-butanediol, neopentylglycol, 2,3-butanediol, 1,5-pentanediol, 1,6-hexanediol, 2,5-hexanediol, 1,4-cyclohexanediol and 1,4-cyclohexane dimethanol.

The range of the average molecule weight of the polycarbonate diol, expressed as the number average molecule weight, is 500 to 5,000, and preferably is 1,000 to 3,000, and substantially all of the polymer terminals are preferably terminated by a hydroxyl group. In the present invention, a polycarbonate that has been made multi-functional by the use of a small amount of a compound having 3 or more hydroxyl groups in one molecule, such as trimethylol ethane, trimethylol propane and hexanetriol, pentaerythritol, may be used in addition to the previously described diols.

Examples of polyether polyols include polyethylene glycol, polypropylene glycol, polytetramethylene glycol, random copolymers of such, block copolymers of such, and polyoxyalkylene-modified bisphenol A.

Examples of the polycaprolactone polyol include polycaprolactone polyols obtained by ring-opening addition polymerization of lactone compounds to polyols. Examples of the polyol include the same type of polyols described above for the polyester polyols. Furthermore, examples of the lactone compound include β-propiolactone, pivalolactone, δ-valerolactone, ε-caprolactone, methyl-ε-caprolactone, dimethyl-ε-caprolactone, and trimethyl-ε-caprolactone.

Examples of the polyalkylene polyol include polybutadiene polyol, hydrogenated polybutadiene polyol and hydrogenated polyisoprene polyol.

As the polylol, a polyester polyol or polycarbonate polyol is preferable, a polycarbonate polyol is more preferable, and a polycarbonate diol is even more preferable.

The isocyanate is not particularly limited so long as an isocyanate group is provided in one molecule, and a conventionally known isocyanate may be used. The isocyanate preferably is a polyisocyanate having at least 2 isocyanate groups in one molecule. A single type of the isocyanate may be used, or a combination of two or more types may be used.

Examples of the polyisocyanate include 4,4'-diphenylmethanediisocyanate (4,4'-MDI), 2,4-diphenylmethanediisocyanate (2,4-MDI), 2,2'-diphenylmethanediisocyanate (2,2'-MDI), carbodiimide-modified diphenylmethane diisocyanate, polymethylene polyphenyl polyisocyanate, carbodiimide-modified diphenylmethane polyisocyanate. tolylene diisocyanate (TDI, 2,4 form, 2,6 form, or mixtures thereof), xylylene diisocyanate (XDI), 1,5-naphthalene diisocyanate (NDI), tetramethyl xylene diisocyanate, phenylene diisocyanate, hexamethylene diisocyanate (HDI), dimer acid diisocyanate, norbornene diisocyanate, lysine diisocyanate, xylylene diisocyanate, tetramethylxylylene diisocyanate, isophorone diisocyanate (IPDI), hydrogenated diphenylmethane diisocyanate (hydrogenated MDI), hydrogenated xylylene diisocyanate (hydrogenated XDI), cyclohexane diisocyanate, dicyclohexyl methane diisocyanate and isophorone diisocyanate.

The polyisocyanate is preferably a diisocyanate or triisocyanate. Examples of the diisocyanate or triisocyanate include isophorone diisocyanate, tolylene diisocyanate, 4,4'-diphenylmethanediisocyanate, naphthalene diisocyanate, xylylene diisocyanate, phenylene diisocyanate, 3,3'-dichloro-4,4'-phenylmethanediisocyanate, tolylene diisocyanate, hexamethylene diisocyanate, 4,4'-dicyclohexyl methane diisocyanate, hydrogenated xylylene diisocyanate, triphenylmethane triisocyanate, tetramethylxylene diisocyanate and hydrogenated 4,4'-diphenylmethanediisocyanate.

The polyurethane resin in an aqueous emulsion form of the present invention is more preferably a polycarbonate urethane resin formed by reacting a diisocyanate with a polycarbonate polyol.

The polyolefin resin, epoxy resin, or polyamide imide resin in an aqueous emulsion form can be made, for example, by a method of emulsifying curable resins synthesized by a conventionally known method, using mechanical means in the presence of a surfactant. The silicone resin in an aqueous emulsion form can be obtained by emulsion polymerizing a silane monomer or chain or cyclic silicone oligomer with a low molecular weight in the presence of a surfactant, in addition to emulsion dispersing a silicone resin pre-synthesized as described above.

Examples of the polyolefin resin include polyethylene resin, polypropylene resin, and other olefin copolymers, and in particular, may be a copolymer of a different vinyl monomer. Furthermore, from the perspective of storage stability of the aqueous emulsion, the monomer sequence of the olefin copolymer is particularly preferably random (atactic).

The epoxy resin is not particularly limited, and may be one or more type selected from bisphenol epoxy resin, amine epoxy resin, phenol novolak epoxy resin, cresol novolak epoxy resin, resorcinol epoxy resin, phenol aralkyl epoxy resin, naphthol aralkyl epoxy resin, dicyclopentadiene epoxy resin, epoxy resin having a biphenyl skeleton, isocyanate modified epoxy resin, tetraphenyl ethane epoxy resin, triphenyl methane epoxy resin and fluorene epoxy resin.

The polyamide resin is a synthetic resin having an amide bond, and generally can be a resin obtained by a condensation reaction between a polyamine having two or more amine groups and a polybasic acid having two or more carboxyl groups. Examples of the polybasic acid include succinic acid, glutaric acid, adipic acid, sebacic acid, phthalic acid, isophthalic acid, terephthalic acid, trimellitic acid, tetrahydrophthalic acid, endomethylene tetrahydrophthalic acid and hexahydrophthalic acid. On the other hand, examples of the polyamine include hydrazine, methylene diamine, ethylene diamine, propylene diamine, butylene diamine, hexane diamine, ethylamino ethylamine, methylamino propylamine, imino bispropylamine, diethylene triamine, triethylene tetramine, polyethylene imine, diaminobenzene, triaminobenzene, diamino ethylbenzene, triamino ethylbenzene, diamino ethylbenzene, triamino ethylbenzene, polyamino naphthalene, polyamino ethyl naphthalene, and N-alkyl derivatives and N-acyl derivatives thereof. One type of the polyamide resin may be used independently, or two or more types may be used in combination.

Examples of a method of emulsifying or dispersing in order to obtain a curable resin in an aqueous emulsion form include conventional emulsifying methods. Examples of the emulsifying method include a high pressure emulsifying method using mechanical force, an inversion emulsifying method, ultrasonic emulsifying method and solvent emulsifying method. Note that if the curable resin is not self-emulsifiable, the curable resin is preferably emulsified or dispersed in water using the same or different surfactant from the surfactants described later.

The curable resin in an aqueous emulsion form contains water as a dispersing medium in addition to the curable resin and arbitrary surfactant component, and if a curable resin in an aqueous emulsion form is used as a component of an aqueous coating agent composition, all or a portion thereof is included in water which is component (E).

### Component (B)

Component (B) is a surfactant, and is a component for uniformly dispersing solid particles as component (C) in an aqueous coating agent composition. The solid particles, and particularly solid particles as a solid lubricant generally have inferior water dispersibility even if a hydrophilic treatment is performed on the surface for example, and if component (B) is not used, it is difficult to obtain a uniform aqueous coating agent by separating or precipitating solid particles which is component (C) from the aqueous coating agent composition.

On the other hand, as described above, solid particles or a surfactant added into the system may impair dispersing stability of the curable resin in an aqueous emulsion form. Component (B) in the present invention may be a surfactant used in forming a curable resin in an aqueous emulsion form, or may be a surfactant different from the surfactant used in forming a curable resin in an aqueous emulsion form. This is because even if a resin emulsion can be formed without using a surfactant as with a self-emulsifying polyurethane resin, a surfactant is added into the system in order to disperse solid particles, and therefore, the surfactant interacts with the surface of the curable resin, which may impair the dispersed condition. In the present invention, the surfactant which is component (B) particularly preferably includes an anionic surfactant, which is different from the surfactant used in forming an emulsion of component (A).

The type of the surfactant of component (B) is not particularly limited, and a nonionic surfactant, anionic surfactant, amphoteric surfactant, or cationic surfactant can be used. Examples of the nonionic surfactant include polyoxyethylene alkyl ethers, polyoxyalkylene (ethylene and/or propylene) alkyl phenyl ethers, polyoxyethylene alkyl esters configured from a polyethyelene glycol (or ethylene oxide) and higher fatty acid (such as a straight chain or branched fatty acid having 12 to 18 carbon atoms), polyoxyethylene sorbitan alkyl esters configured from sorbitan, a polyethylene glycol and higher fatty acid (such as a straight chain or branched fatty acid with 12 to 18 carbon atoms). Examples of the anionic surfactant include fatty acid salts, sulfuric acid ester salts, sulfonic acid salts, phosphoric acid ester salts and dithiophosphoric acid ester salts. Examples of the amphoteric surfactant include amino acid and betaine carboxylic acid salts, sulfuric acid ester salts, sulfonic acid salts and phosphoric acid ester salts. Examples of the cationic surfactant include aliphatic amine salts and quaternary ammonium salts. One type of the surfactant may be used independently or two or more types may be used in combination.

Specific examples of the anionic surfactant include surfactants such as potassium oleates, sodium laurates, sodium dodecylbenzene sulfonates, sodium alkanesulfonates, sodium alkyl naphthalene sulfonates, sodium dialkyl sulfonsuccinates, sodium polyoxyethylene alkyl ether sulfates, sodium polyoxyethylene alkyl aryl ether sulfates, polyoxyethylene alkyl phosphate esters and polyoxyethylene alkyl aryl phosphate esters.

Specific examples of the cationic surfactant include surfactants such as stearylamine hydrochlorides, lauryl trimethyl ammonium chlorides and trimethyl octadecyl ammonium chlorides.

Specific examples of the nonionic surfactant include surfactants such as polyoxyethylene alkyl ethers, polyoxyethylene alkyl aryl ethers, polyoxyethylene oxypropyl block polymers, polyethylene glycol fatty acid esters and polyoxyethylene sorbitan fatty acid esters.

### Component (C)

Component (C) is solid particles and is a component that provides a desired function on the aqueous coating agent of the present invention. The type of solid particles is not particularly limited, but examples include solid lubricants, wear resistance agents, pigments, coloring materials, ultraviolet absorbers, heat conductive fillers, conductive fillers, insulating materials, and other functional particles. Note that a portion of the particles can be blended as a plurality of functional particles.

If the aqueous coating agent of the present invention is used as a paint composition for an aqueous lubricating film, at least a portion of component (C) is preferably a solid lubricant By including a solid lubricant, the composition of the present invention can form a lubricating film on the substrate surface, and the lubricating film can maintain excellent sliding properties over a long period of time. Thus the composition of the present invention is able to impart a lubricating film that provides excellent sliding durability and high adhesion as a paint composition for lubricating film.

The solid lubricant is not particularly limited, and one type of the solid lubricant may be used, or two or more types of solid lubricant may be used in combination. Specific examples include molybdenum disulfide, tungsten disulfide, calcium stearate, mica, graphite, polytetrafluoroethylene (PTFE), other lubricating resins and complex oxides having an oxygen-deficient perovskite structure (such as SrₓCa₁₋ₓCuO_{y}). Furthermore, examples include fine particles which can be expected to prevent burning by suppressing direct contact between metals without excessively reducing the coefficient of friction, as with carbonates (such as carbonates of Na₂CO₃, CaCO₃, MgCO₃, and other alkali metals and alkali earth metals), silicates (such as MxOySiO₂ [M: alkali metals, alkali earth metals]), metal oxides (such as oxides of typical metal elements, oxides of transition metal elements, complex oxides containing the metal elements (such as Al₂O₃/MgO)), sulfides (PbS), fluorides (CaF₂ and BaF₂), carbides (SiC, TiC), nitrides (TiN, BN, AlN and Si₃N₄), cluster diamonds, and mixtures of fullerene C₆₀ or C₆₀ and C₇₀. Examples of the oxides of typical metal elements include Al₂O₃, CaO, ZnO, SnO, SnO₂, CdO, PbO, Bi₂O₃, Li₂O, K₂O, Na₂O, B₂O₃, SiO₂, MgO and In₂O₃. Of these, typical metal elements are preferably an alkali earth metal, aluminum, or zinc. Examples of the oxides of transition metal elements include TiO₂, NiO, Cr₂O₃, MnO₂, Mn₃O₄, ZrO₂, Fe₂O₃, Fe₃O₄, Y₂O₃, CeO₂, CuO, MoO₃, Nd₂O₃ and H₂O₃.

Examples of the solid lubricant include: fine particles of organic compounds formed from fluorocarbon resins (and particularly polytetrafluoroethylene and tetrafluoroethylenehexafluoropropylene copolymers), polyethylene resins and polyamide resins, and the like; fine particle of inorganic compounds such as molybdenum disulfide, graphite, aluminum oxide, boron nitride and zinc oxide; fine particles of metals such as lead; and mixture thereof. In particular, use of at least one type of solid lubricant selected from fluorine resins, polyethylene resins, polyamide resins, molybdenum disulfide, graphite, aluminum oxide, boron nitride, zinc oxide, and mixtures thereof is preferred. Note that if the resin particles are used as the solid lubricant, an emulsion form is not required, unlike component (A).

The average particle size of the solid lubricant is preferably less than or equal to 15 µm, and more preferably is 0.2 to 10 µm. Note that "average particle size" herein refers to the volume average particle size measured using a laser diffraction type particle size distribution measuring device.

The reinforcing filler is a component for providing mechanical strength on a film formed by curing the aqueous coating agent of the present invention, and improves performance as a protecting agent or adhesive. Examples of the reinforcing filler can include: inorganic fillers such as fumed silica fine powder, precipitated silica fine powder, baked silica fine powder, fumed titanium dioxide fine powder, quartz fine powder, calcium carbonate fine powder, diatomaceous earth fine powder, aluminum oxide fine powder, aluminum hydroxide powder and zinc oxide fine powder; and inorganic fillers where these inorganic fillers have been surface treated with a treating agent such as organoalkoxysilanes like methyltrimethoxysilane, organohalosilanes such as trimethylchlorosilane, organosilazanes such as hexamethyldisilazane, α,ω-silanol group-blocked dimethyl siloxane oligomers, α,ω- silanol group-blocked methyl phenyl siloxane oligomers, α,ω-silanol group-blocked methyl vinyl siloxane oligomers, and other siloxane oligomers. Note that a portion of the silica has a function as a thickener or wear resistance agent.

Examples of the solid particles as the heat conductive fillers and conductive fillers include: gold, silver, nickel, copper, and other metal fine powders; fine powders where gold, silver, nickel, copper, or other metal is vapor deposited or plated onto a fine powder surface such as ceramics, glass, quartz and organic resins; aluminum oxides, aluminum nitrides, zinc oxides, and other metal compounds; and mixtures of two or more types thereof. Silver powder, aluminum powder, aluminum oxide powder, zinc oxide powder, aluminum nitride powder, and graphite are particularly preferred. Furthermore, if electrical insulating properties are required, metal oxide powder or metal nitride powder is preferably used, and aluminum oxide powder, zinc oxide powder, or aluminum nitride powder are particularly preferably used.

Other solid particles may be a coloring agent such as a pigment [inorganic coloring agent (inorganic pigment)] or an achromatic color or may be a chromatic color (yellow, orange, red, purple, blue or green). Furthermore, titanium oxide, zinc oxide, or other metal oxides (or metal oxide particles) are included in the solid particles having various functions such as ultraviolet ray absorbing properties (or blocking properties). In particular, if providing color or an ultraviolet ray coating function in the coating agent of the present invention is desired, these components are preferably included.

Examples of arbitrary solid particles other than the aforementioned include metal hydroxides (such as aluminum hydroxide), metal salts (such as sulfates, calcium carbonates, and other carbonates; calcium phosphates, titanium phosphates, and other phosphates; mica, calcium silicates, bentonite, zeolite, maifan stone, talc, montmorillonite, and other silicates; calcium tungstate and other tunstates; barium titanate, potassium titanate, aluminum titanate, strontium titanate, and other titanates), metal nitrides (silicon nitrides, boron nitrides, aluminum nitrides and titanium nitrides), metal carbides (silicon carbides, boron carbides, titanium carbides and tungsten carbides), metal borides (titanium borides and zirconium borides), metals (gold, platinum and palladium), carbons (carbon black, graphite, fullerene and carbon nanotube), silicone resin fillers, fluorine resin fillers and polybutadiene resin fillers. The solid particles may be fibrous (for example, glass fibers, carbon fibers, metal fibers, whiskers), but are preferably granular. The solid particles may be a ferromagnetic body such as iron, cobalt, nickel, or other ferromagnetic metals (powder); magnetite, ferrite, or other ferromagnetic alloy (powder); magnetic iron oxide or other ferromagnetic metal oxide (powder). Examples of the silicone resin can include "TREFIL" manufactured by Dow Corning Toray Co., Ltd., "SPM" manufactured by Wacker Asahikasei Silicone Co., Ltd.

The shape of the solid particles is not particularly limited, and can be spherical, plate-shaped, needle-shaped or fibrous. If the shape of the solid particles is anisotropic such as a plate shape, needle shape or fibrous shape, the aspect ratio thereof can be 1.5 or more, 5 or more, or 10 or more.

### Component (D)

Component (D) is at least one type of heterocyclic compound containing nitrogen which is a characteristic component of the present invention, is a hydrophilic solvent miscible with water (E), and at the same time, functions as a film forming auxiliary agent of an aqueous coating agent composition.

When adding a surfactant in the system in order to stably disperse the solid particles of the solid lubricant, the curable resin in emulsion form and the surfactant interact with each other, and a surface condition of the curable resin is destabilized, thickening and gelling occur, and fluidity (in other words, coatability) can be remarkably impaired. On the other hand, if the surfactant is not added, the solid particles of the solid lubricant form a precipitate in the aqueous coating agent, and preservation stability is impaired and the entire aqueous coating agent cannot be uniformly coated, and therefore there are cases where a coating film having the desired function cannot be obtained. However, by using component (D) of the present invention, interaction with a surfactant in the system can be relieved, the solid particles (C) and curable resin (A) in an aqueous emulsion form can be stably dispersed, and gelling or formation of coarse particles can be suppressed. Furthermore, as described above, component (D) is a film forming auxiliary agent, and can provide a uniform and strong coating agent during curing. Furthermore, component (D) may be one type, or if necessary, is used independently or mixed with two or more types.

Component (D) is structurally a 4 to 20 membered ring heterocyclic compound including at least one nitrogen atom in a cyclic portion, and preferably the carbon atom adjacent to the nitrogen atom configures a portion of the ketone groups (C=O). Furthermore, based on affinity with water (E) and function as a film forming auxiliary agent, a 4 to 13 membered ring, 4 to 8 membered ring, or 4 to 6 membered ring heterocyclic compound containing 1 or more nitrogen atom is preferred, and preferable examples include pyrrolidone compounds, imidazolidinone compounds, and oxazolidone compounds having a ketone group, which are 5 membered ring heterocyclic compounds containing 1 or 2 or more nitrogens.

On the other hand, even if a heterocyclic compound that does not contain a nitrogen atom (N) in a cyclic portion, such as a lactone compound is used, the technical effects of the present invention surprisingly cannot be achieved. Similarly, even if a ketone compound that does not correspond to a heterocyclic compound containing nitrogen is used (for example, acetone or methyl ethyl ketone), the technical effects of the present invention are not achieved, but instead, the stability of the aqueous coating agent composition may be seriously adversely affected due to emulsion failure. Therefore, selecting a heterocyclic compound containing nitrogen is essential for achieving the specific and remarkable technical effects of the present invention, and it is difficult to predict the technical effects from a compound having a similar structure.

Examples of the heterocyclic compound containing nitrogen as component (D) include heterocyclic compounds containing two nitrogen atoms as expressed by the following structural formula (D-1), or heterocyclic compounds containing one nitrogen atom as expressed by the following structural formula (D-2).

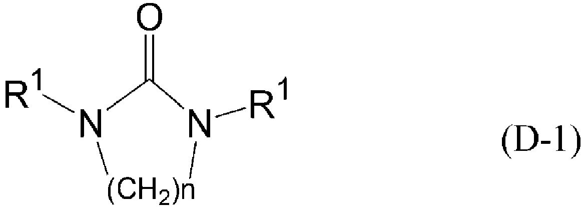

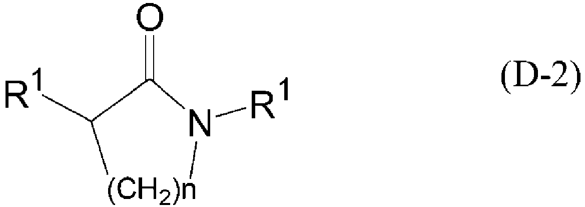

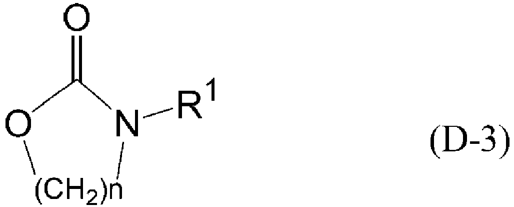

In the formula, R¹ independently represents a hydrogen atom or alkyl group with 1 to 9 carbon atoms, and examples include hydrogen atoms, methyl groups, ethyl groups, hexyl groups, cyclohexyl groups, and other straight chain, branched, or cyclic alkyl groups. Note that a portion of the hydrogen atoms in the alkyl group may be substituted by a halogen atom. n is a number within a range from 1 to 10, where n is preferably a number within a range from 1 to 5, and n is most preferably 2 or 3, and in other words, a five-membered ring structure or six-membered ring structure.

Examples of component (D) are at least one type of heterocyclic compound containing nitrogen selected from 1,3-dimethyl-2-imidazolidinone, N-methyl-2-pyrrolidone, N-ethyl-2-pyrrolidone, N-methyl-3-methyl-2-pyrrolidone, cyclohexyl pyrrolidone, 2-oxazolidone, and 3-methyl-2-oxazolidone. Of the heterocyclic compound containing nitrogen of the five-membered ring structure, a pyrrolidone compound or imidazolidinone compound as expressed by the aforementioned formulas (D-1) or (D-2) and where n = 2 is particularly preferred. Specific examples include 1,3-dimethyl-2-imidazolidinone, N-methyl-2-pyrrolidone, and N-ethyl-2-pyrrolidone, and 1,3-dimethyl-2-imidazolidinone of which 1,3-dimethyl-2-imidazolidinone is particularly preferred.

Furthermore, component (D) may be selected from components expressed by the following structural formula including 1,3-dimethyl-2-imidazolidinone from the perspective of environmental regulations. The reason is described below.

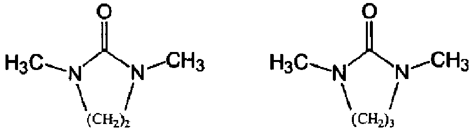

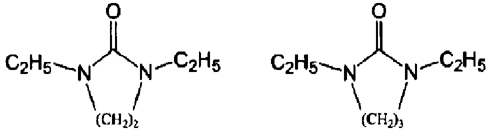

From the perspective of a film forming auxiliary agent, N-methyl pyrrolidone (NMP), N,N-dimethyl acetamide, N,N-dimethyl formamide, and other amide solvents more favorably plasticize aqueous emulsion resins, and are solvents with excellent handling workability based on having a high boiling point and low freezing point. However, amide solvents have been reported in Europe to have reproductive toxicity, and thus care is required in handling amide solvents, including handling residual solvent in coating films or structures, mainly in Europe. In particular, in Europe, there is a movement to abandon use of amide solvents, and N-methyl pyrrolidone (NMP) and other amide solvent may be prohibited from the perspective of the effects on the environment and the human body.

On the other hand, by using a compound such as the 1,3-dimethyl-2-imidazolidinone, a solvent that is less likely to adversely affect the environment or human body is used, and thus an aqueous coating agent composition with excellent handling workability and stably flows can be provided. From the perspective of resolving the environmental regulations, component (D) is most preferably 1,3-dimethyl-2- imidazolidinone.

### Component (E)

Component (E) is water, and is a dispersing medium of the aqueous coating agent composition of the present invention. Water may be introduced into the system as a dispersing medium of the curable resin in an aqueous emulsion form of the aforementioned component (A), or may be introduced into the system as an aqueous solution of the surfactant of component (B). Furthermore, premixing with another arbitrary water soluble component described later or alcohol or other hydrophilic solvent may be performed, in addition to the aforementioned component (D).

### Composition of Aqueous Coating Agent

The aqueous coating agent of the present invention contains the aforementioned components (A) to (E), and preferably, with regard to 100 parts by weight of the solid content of component (A):
0. 1 to 50 parts by mass of the component (B), 5 to 200 parts by mass of the component (C), 1 to 20 parts by mass of the component (D), and 50 to 1000 parts by mass of the component (E).

Also disclosed with regard to 100 parts by weight of the solid content of component (A) is as follows:
component (B) can be 0.5 to 50 parts by weight, 1 to 50 parts by weight, 2 to 40 parts by weight or 5 to 35 parts by weight;
component (C) can be 20 to 180 parts by weight, or 40 to 150 parts by weight;
component (D) can be 2 to 15 parts by weight or 5 to 10 parts by weight; and
component (E) can be 100 to 800 parts by weight, or 300 to 600 parts by weight. Note that herein, "solid content of component (A)" refers to a nonvolatile component when water of other volatile component is removed from component (A) by drying or heating, and is primarily formed from a main agent of the curable resin or a nonvolatile curable resin itself.

### Other Arbitrary Water Soluble Components

So long as the technical effects of the present invention, namely, stability of the curable resin in an aqueous emulsion form, handling workability, and function of the obtained coating film are not impaired, the aqueous coating agent composition of the present invention may contain a lame agent, pearling agent, preservative, perfume, plasticizer, antifoaming agent, filler, antioxidant, ultraviolet ray absorber, curing agent, catalyst, solvent, water soluble polymer, flame retardant, antistatic agent, heat stabilizer, pH adjusting agent, or other additive added for the purpose of freezing prevention, wetting, pigment dispersion, emulsion, skinning prevention, leveling or drying promotion.

For example, the composition of the present invention can include a film formation auxiliary agent other than component (D). Examples of the film formation auxiliary agent epoxy resins and epoxy silanes. An epoxy resin as the film formation auxiliary agent can be used in a range of 0.1 to 10% by mass (weight) based on the total mass (weight) of the composition of the present invention for example. An epoxy silane as the film formation auxiliary agent can be used in a range of 0.1 to 5% by mass (weight) based on the total mass (weight) of the composition of the present invention.

The composition of the present invention can contain at least one type of alcohol solvent. The single alcohol solvent may be used in the present invention, or a plurality of alcohol solvents may be used in combination. From the perspective of processability, the solvent is preferably water or a mixture of water and a lower alcohol, and examples of the lower alcohol include methanol, ethanol or propanol.

The composition of the present invention can contain at least one type of silicone rubber. A single silicone rubber may be used in the present invention, or a plurality of silicone rubbers may be used in combination. The temperature dependency of the viscosity of the composition of the present invention can be reduced by blending silicone rubbers. A conventionally known silicone rubber can be used appropriately as the silicone rubber. For example, the silicone rubber can be used in a range of 0.001 to 3% by mass (weight) based on the total mass (weight) of the composition of the present invention.

The composition of the present invention can contain at least one type of an antifoaming agent. In the present invention, a single antifoaming agent may be used, or a plurality of antifoaming agents may be used in combination. By blending antifoaming agents, foaming during coating by the composition of the present invention can be suppressed, and thus the coating operation can be facilitated. A conventionally known antifoaming agent can be used appropriately as the antifoaming agent. For example, the antifoaming agent can be used in a range of 0.00001 to 1% by mass (weight) based on the total mass (weight) of the composition of the present invention.

The composition of the present invention can contain at least one type of thickening agent. In the present invention, a single thickening agent may be used, or a plurality of thickening agents may be used in combination. By blending thickening agents, the viscosity of the composition can be increased to reduce liquid dripping during coating, and to facilitate a paint operation. A conventionally known thickening agent can be used appropriately as the thickening agent. For example, the thickening agent can be used in a range of 0.001 to 1% by mass (weight) based on the total mass (weight) of the composition of the present invention.

### Method of Preparing Composition

The preparation method of the composition of the present invention is not particularly limited, and the composition can be obtained by using mechanical force to uniformly mix and disperse the components (A) to (E) and other water soluble optional components, and if necessary, manufactured by mixing and dispersing water for concentration adjustment and other optional additives. The mixing method and mixing order are not limited.

On the other hand, preferably, creating an (A) emulsion liquid containing a curable resin with an aqueous emulsion form by an emulsion polymerization method using an ionic or nonionic surfactant, and then adding one type or more of heterocyclic compound containing nitrogen which is component (D) to the emulsion liquid of the component (A), and plasticizing or stabilizing the curable resin with an aqueous emulsion form is preferable. In this condition, by manufacturing by using mechanical force to uniformly mix and disperse other surfactants, (C) solid particles (preferably solid lubricant), and water, thickening and gelling of the aqueous coating agent of the present invention can be controlled, and excellent handling workability can be attained. In particular, the preferred embodiment of the present invention is a surfactant containing an anionic surfactant that is different from a surfactant used in forming an emulsion of component (A), and component (D) being a heterocyclic compound containing nitrogen selected from 1,3-dimethyl-2-imidazolidinone, N-methyl-2-pyrrolidone, and N-ethyl-2-pyrrolidone.

Examples of a device to perform the mixing and dispersing are mixers such as a propeller type, paddle type and anchor type, homomixer, homodisper, homogenizer, high pressure homogenizer, extra high pressure homogenizer, ultrasonic homogenizer, vibration mill, ball mill, planetary ball mill, sand mill, vacuum emulsification device and paint shaker.

### Coating Composition for Aqueous Lubricating Film

If at least a portion of the solid particles which are component (C) includes a solid lubricant, the aqueous coating agent composition of the present invention can form a lubricating film onto a substrate surface, and can be used in paint for an aqueous lubricating film. The paint for an aqueous lubricating film according to the present invention has excellent handling workability as an aqueous paint and coating agent, and the lubricating film can maintain excellent sliding characteristics for a long period of time. Thus the composition of the present invention is able to impart a lubricating film that provides excellent sliding durability and high adhesion as a paint composition for lubricating film.

### Substrate

The aqueous coating agent composition of the present invention, preferably a paint composition for an aqueous lubricating film can be cured by heating and drying or high energy beam irradiating, and then used in a coating film form, preferably a lubricating film form, and form a coating film or lubricating film with high adhesion on a surface of an arbitrary substrate.

The material of the substrate is not particularly limited, but examples include metal such as iron, aluminum and copper rubber, resin, paper, wood, glass, cement, asphalt and leather. In order to improve adhesion, the surface of the substrate may be subjected to a surface roughening treatment by electrolytic etching, chemical etching or shot blasting, or may be subjected to chemical treatment by phosphate salts.

In the present invention, the above described aqueous coating agent composition, preferably the paint composition for an aqueous lubricating film, can be coated on the substrate surface, and then a film can be formed on the substrate surface by heating the composition and/or by high energy beam irradiation of the composition.

The method of coating the aforementioned composition onto the substrate surface is not particularly limited, and a conventional known coating method can be used, such as a screen printing method, spray method, tumbling method, immersion method and brush painting method. In particular, if the composition of the present invention is used as the paint composition for an aqueous lubricating film, coating, and then allowing to sit for a certain period of time to perform leveling is preferable. By leveling, the lubricity of the film obtained can be improved. Note that the substrate can be subjected to preparatory heating at the time of coating, but coating is preferably performed at room temperature (approximately 25°C) in view of workability. Furthermore, in order to remove a solvent such as water from the composition of the present invention, the coated substrate is set aside for 1 to 240 minutes at room temperature, or heated for 1 to 60 minutes at 40 to 80°C, for example, to preferably remove the solvent.

Then, after removing the solvent, if the curable resin in the composition has thermal curability, the composition film coated onto the substrate surface is heated to obtain a cured film. The type of heating can be adjusted appropriately, and for example, heating can be performed at 170 to 200°C for 5 to 90 minutes. If required, the aforementioned heating for removal of the solvent and the heating for curing of the resin may be performed simultaneously.

If the curable resin of the aforementioned composition is a high energy beam curing type, a cured film is obtained by irradiation of the composition coated onto the substrate surface using a high energy beam such as ultraviolet radiation, X-rays and electron beam. From the perspective of safety, ultraviolet rays are preferably used as the high energy beam. The irradiation amount of the ultraviolet radiation can be adjusted appropriately when ultraviolet radiation is used as the high energy beam, and the cumulative irradiated amount is preferably 1000 to 4000 mJ/cm² and more preferably 2000 to 3000 mJ/cm².

The present invention also relates to the coating film, and particularly the lubricating film obtained in this manner. The film of the present invention may have any thickness. The thickness of the film of the present invention may be set to 1 to 50 µm, for example, and preferably is set to 2 to 25 µm, and further preferably is set to 3 to 15 µm.

### Member

The member provided with the coating film according to the present invention, and particularly the lubricating film, is useful as a sliding member. The type of sliding member is not particularly limited, and examples include members made from rubbers, plastics, or metals.

Examples of the rubber sliding member include timing belts, conveyor belts, sunroof body seals, glass window linings, weather strips, oil seals, packings, wiper blades, doctor blades, electro-charging rollers, developing rollers, toner feed rollers, transfer rollers, transfer rollers, heat rollers, compression rollers, cleaning blades, paper feed rollers, transport rollers, doctor blades, intermediate transfer belts, intermediate transfer drums, heating belts, and other driving members, sliding members and transferring parts, for automobiles, copying machines and printers.

Examples of the plastic sliding member include door panels, instrument panels, door locks, bearings, gears, belt tensioners, fixing belts, pressure belts, and other driving members, sliding members, transferring members, and the like for automobiles, copying machines and printers.

Examples of the metal sliding member include crankshafts, compressor shafts, slide bearings, gears, oil pump gears, pistons, piston rings, piston pins, gaskets, door locks, guide rails, seat belt buckles, brake pads, brake pad clips, brake shims, brake insulators, hinges, screws, pressure pads, and other driving members, sliding members, transferring members, and the like for automobiles, copying machines and printers.

The form of the sliding member is not particularly limited, and the sliding member may be fiber-like or include fibers. Examples of the fiber-like sliding member or sliding member including fibers include vehicle seats, carpets, tire cords and seatbelts.

### Industrial Applicability

Use of the member provided with the aqueous coating agent composition of the present invention and the coating film is not limited, and for example, can be used in home appliances, ships, railways, aircrafts, machines, structures, automobile repairs, automobiles, buildings, building materials, fibers, leather, stationary, woodworking, furniture, miscellaneous goods, steel sheets, cans, electronic substrates, electronic parts and printing. In particular, the present invention can be used for various types of products provided with a lubricating film, and can be preferably used particularly for manufacturing a sliding member provided with a lubricating film.

### Examples

The present invention will be described below with reference to the practical examples.

### Examples 1 to 7 and Comparative Examples 1 to 8

The components were mixed at a ratio shown in Table 1 and Table 2 to obtain an aqueous coating agent (paint composition for an aqueous lubricating film) of Examples 1 to 7 and Comparative Examples 1 to 8.

Note that the numerical values shown in Table 1 and Table 2 are parts by mass. Furthermore, the aqueous polyurethane resin/aqueous polyolefin resin in the table are described in parts by mass (100 parts by mass) of solid content as a binder which is component (A) of the present invention, and the water in aqueous emulsion form is included in a water component (E) and described.

### Flow Stability

Flow stability of the coating agent was determined according to the following criteria and shown in Table 1 (Examples 1 to 7) and Table 2 (Comparative Examples 1 to 8).
⊚: Extremely stable
○: Stable but thick
Δ: Thickened, and then gelled after 24 hours
×: Immediately gelled
××: Solid lubricant cannot be dispersed and floatation or precipitation occurs

Furthermore, the components and terms used in the table are as follows. Note that in the table, the parts by mass of "water" are the sum of the components derived from other raw material components.
Aqueous polyurethane resin: aqueous emulsion of aliphatic polyurethane resin (40% by weight solids content)
Aqueous polyolefin resin: aqueous emulsion of maleic anhydride-modified 1-propene/1-butene copolymer (30% by weight solids content).
Sodium dodecylbenzenesulfonate: 50% by weight solids content, manufactured by NOF Corporation.
PTFE (polytetrafluoroethylene) powder: Spherical polytetrafluoroethylene resin fine particles (100% by weight solids content) of 3 to 5 µm median diameter as measured by laser diffraction scattering type particle size distribution measurement
PTFE (polytetrafluoroethylene) dispersion: Spherical polytetrafluoroethylene resin fine particles (50% by weight solids content) of 0.10 to 1.00 µm median diameter as measured by laser diffraction scattering type particle size distribution measurement
Agitan 295: Defoaming agent, manufactured by MÜNZING CHEMIE GMBH 1,3-dimethyl-2-imidazolidinone: DMEU, manufactured by Kawaken Fine Chemicals Co., Ltd.
N-methyl-2-pyrrolidone: N-methyl-2-pyrrolidone, manufactured by BASF Japan Ltd. N-ethyl-2-pyrrolidone: N-ethyl-2-pyrrolidone, manufactured by BASF Japan Ltd. Triethanolamine: Triethanolamine, >=98.0%, manufactured by Wako Pure Chemical Industries, Ltd., Sigma-Aldrich Japan Co.
Diethanolamine: Diethanolamine, 99%, manufactured by WAKO Pure Chemical Industries, Ltd.
γ-butyrolactone: Gamma-butyrolactone, 99.5% or higher, manufactured by Mitsubishi Chemical Corporation
Benzyl benzoate: Benzyl benzoate, Wako special grade, manufactured by Wako Pure Chemical Industries, Ltd.
Methyl ethyl ketone: Methyl ethyl ketone, manufactured by Wako Pure Chemical Industries, Ltd.
Acrylonitrile-butadiene-styrene copolymer (ABS) resin sheet: Tough Ace EAR-003, manufactured by Sumitomo Bakelite 1 Co., Ltd.
SPCC-SB steel sheet: SPCC-SB, manufactured by Nisshin Steel Co., Ltd.

### Example 1

1,3-dimethyl-2-imidazolidinone was added as a solvent to an aqueous polyurethane resin emulsion (40% resin solids content) at a mixing ratio shown in in Table 1, and dissolved by stirring and mixing. Thereafter, sodium dodecylbenzenesulfonate which is an anionic surfactant was added and dissolved while stirring, and then a PTFE powder was dispersed as a solid lubricant. A defoaming agent was added, and then the obtained mixture was mixed and agitated at 600 rpm for 30 minutes to obtain an aqueous coating agent composition.

### Example 2

An aqueous coating agent composition was obtained using the same method as Example 1, except that the aqueous coating agent composition (30% resin solids content) was used at a mixing ratio shown in Table 1.

### Examples 3 to 5

An aqueous coating agent composition was obtained using the same method as Example 1, except that a PTFE dispersion was used as a solid lubricant at a mixing ratio shown in Table 1, and 1,3-dimethyl-2-imidazolidinone was used independently or in combination with benzyl benzoate as a solvent.

### Examples 6 to 7

An aqueous coating agent composition was obtained using the same method as Example 1, except that N-methyl-2-pyrrolidone or N-ethyl-2-pyrrolidone was used as a solvent at a mixing ratio shown in Table 1.

### Comparative Examples 1 and 2

An aqueous coating agent composition was obtained using the same method as Example 1, except that triethanolamine or diethanolamine was used as a solvent at a mixing ratio shown in Table 2. When the obtained mixture was set aside at room temperature, the mixture thickened over time, and 24 hours later became a gelled condition that did not flow.

### Comparative Examples 3 and 4

When the mixture obtained using the same method as Example 1, except for using γ-butyrolactone or benzyl benzoate as a solvent at a mixing ratio shown in Table 2, was stirred and mixed at 600 rpm, the mixture rapidly thickened and became a gelled condition that did not flow.

### Comparative Example 5

When methyl ethyl ketone was added, stirred, and mixed as a solvent into an aqueous polyurethane resin emulsion (40% resin solids content) at a mixing ratio shown in Table 2, an aggregate of the resin emulsion was generated and precipitated.

### Comparative Example 6

When the mixture obtained using the same method as Example 1, except for using PTFE dispersion as a solid lubricant and benzyl benzoate as a solvent at a mixing ratio shown in Table 2, was stirred and mixed at 600 rpm, an aggregate of the resin emulsion was generated and precipitated.

### Comparative Example 7

When the mixture obtained using the same method as Example 1, without using a solvent at a mixing ratio shown in Table 2, was stirred and mixed at 600 rpm, the mixture rapidly thickened and became a gelled condition that did not flow.

### Comparative Example 8

When the mixture obtained using the same method as Example 1, without using a surfactant at a ratio shown in Table 2, was stirred and mixed at 600 rpm, the PTFE of the solid lubricant could not be sufficiently dispersed, and floatation isolates and precipitates were generated.

### Formation of the Lubricating Film

The aqueous coating agent composition obtained in the examples in Table 1 was spray coated onto the aforementioned acrylonitrile-butadiene-styrene copolymer (ABS) resin sheet or the aforementioned SPCC-SB steel sheet (SPCC steel sheet) so that the film thickness after drying was 10 to 20 µm. Then, drying and curing was performed by setting aside at 25C × 60 minutes in order to evaporate the solvent and water to create a lubricating film. Note that in the comparative examples, the lubricating film could not be formed because of gelling, and therefore "not measureable" was inserted in Table 2.

In the examples, the coefficient of friction of the obtained lubricating film was measured for the ABS resin sheet. Furthermore, for the ABS resin sheet and the SPCC steel sheet, the grid adhesion of the lubricating film was evaluated. The results are shown in Table 1.

### Evaluation Method

### Measurement of Friction Coefficient

For each of the test pieces (ABS) on which was formed the lubricating film, a reciprocating movement friction-wear tester was used for reciprocating movement by movement of a roller applying a vertical load in a rotating manner, and the dynamic friction coefficient (units = µ) was measured during sliding relative to an SUJ 2 steel roller under 0.2 m/s sliding velocity, 100 g load, and 40 mm sliding distance (stroke) conditions, and determined according to the following criteria.
⊚: 0.10 to 0.19
○: 0.20 to 0.29
Δ: 0.30 to 0.39
×: 0.40 to 0.49

### Cross-Cut Adhesion Test

This film on each of the test pieces (ABS resin sheet, SPCC steel sheet) having a lubricating film was cut in a 100 square checkerboard pattern, and Sellotape (registered trademark) pealing testing was performed. The number of lattice elements remaining in the film from among the grid of 100 elements was checked, and determined according to the following criteria.
⊚ (100)
○ (90 to 99)
Δ (50 to 89)
× (0 to 49)

**Table 1**

| **Composition/Example No.** | | 1 | 2 | 3 | 4 | 5 | 6 | 7 |
|---|---|---|---|---|---|---|---|---|
| **(A) Binder (solid content)** | **Aqueous Polyurethane Resin** | 100 | 0 | 100 | 100 | 100 | 100 | 100 |
| | **Aqueous Polyolefin Resin** | 0 | 100 | 0 | 0 | 0 | 0 | 0 |
| **(B) Surfactant** | **Sodium Dodecylbenzene Sulfonate** | 30 | 30 | 5 | 30 | 30 | 30 | 30 |
| **(C) Solid Lubricant** | **PTFE Binder (D50 average particle size of 3 to 5 µm)** | 130 | 130 | 0 | 0 | 0 | 130 | 130 |
| | **PTFE Dispersion (D50 average particle size of 0.1 to 1 µm)** | 0 | 0 | 40 | 130 | 130 | 0 | 0 |
| **Antifoaming Agent** | **Agitan 295** | 0.25 | 0.25 | 0.25 | 0.25 | 0.25 | 0.25 | 0.25 |
| **Solvent** | **(D) 1,3-Dimethyl-2-Imidazolidinone** | 7.5 | 7.5 | 7.5 | 2.5 | 7.5 | 0 | 0 |
| | **(D2) N-Methyl-2-Pyrrolidone** | 0 | 0 | 0 | 0 | 0 | 7.5 | 0 |
| | **(D3) N-Ethyl-2-Pyrrolidone** | 0 | 0 | 0 | 0 | 0 | 0 | 7.5 |
| | **Triethanolamine** | 0 | 0 | 0 | 0 | 0 | 0 | 0 |
| | **Diethanolamine** | 0 | 0 | 0 | 0 | 0 | 0 | 0 |
| | **γ-Butyrolactone** | 0 | 0 | 0 | 0 | 0 | 0 | 0 |
| | **Benzyl Benzoate** | 0 | 0 | 0 | 0 | 7.5 | 0 | 0 |
| | **Methyl Ethyl Ketone** | 0 | 0 | 0 | 0 | 0 | 0 | 0 |
| | **(E) Water** | 600 | 600 | 350 | 600 | 600 | 600 | 600 |
| **Liquid Properties** | **Stability** | ⊚ | ⊚ | ⊚ | ⊚ | ⊚ | ⊚ | ⊚ |
| **Lubricating Film Forming Properties** | **Coefficient of Friction (ABS)** | ⊚ | ○ | ○ | ⊚ | ⊚ | ⊚ | ⊚ |
| | **Cross-Cut Adhesion Substrate: ABS (Upper) Substrate: SPCC Steel Sheet (Lower)** | ⊚ | ○ | ⊚ | ⊚ | ⊚ | ⊚ | ⊚ |
| | | ⊚ | ○ | ⊚ | ⊚ | ⊚ | ⊚ | ⊚ |

**Table 2**

| **Composition/Comparative Example No.** | | 1 | 2 | 3 | 4 | 5 | 6 | 7 | 8 |
|---|---|---|---|---|---|---|---|---|---|
| **(A) Binder (solid content)** | **Aqueous Polyurethane Resin** | 100 | 100 | 100 | 100 | 100 | 100 | 100 | 100 |
| | **Aqueous Polyolefin Resin** | 0 | 0 | 0 | 0 | 0 | 0 | 0 | 0 |
| **(B) Surfactant** | **Sodium Dodecylbenzene Sulfonate** | 30 | 30 | 30 | 30 | 30 | 30 | 30 | 0 |
| **(C) Solid Lubricant** | **PTFE Binder (D50 average particle size of 3 to 5 µm)** | 130 | 130 | 130 | 130 | 130 | 0 | 130 | 130 |
| | **PTFE Dispersion (D50 average particle size of 0.1 to 1 µm)** | 0 | 0 | 0 | 0 | 0 | 130 | 0 | 0 |
| **Antifoaming Agent** | **Agitan 295** | 0.25 | 0.25 | 0.25 | 0.25 | 0.25 | 0.25 | 0.25 | 0.25 |
| **Solvent** | **(D) 1,3-Dimethyl-2-Imidazolidinone** | 0 | 0 | 0 | 0 | 0 | 0 | 0 | 7.5 |
| | **(D2) N-Methyl-2-Pyrrolidone** | 0 | 0 | 0 | 0 | 0 | 0 | 0 | 0 |
| | **(D3) N-Ethyl-2-Pyrrolidone** | 0 | 0 | 0 | 0 | 0 | 0 | 0 | 0 |
| | **Triethanolamine** | 7.5 | 0 | 0 | 0 | 0 | 0 | 0 | 0 |
| | **Diethanolamine** | 0 | 7.5 | 0 | 0 | 0 | 0 | 0 | 0 |
| | **γ-Butyrolactone** | 0 | 0 | 7.5 | 0 | 0 | 0 | 0 | 0 |
| | **Benzyl Benzoate** | 0 | 0 | 0 | 7.5 | 0 | 7.5 | 0 | 0 |
| | **Methyl Ethyl Ketone** | 0 | 0 | 0 | 0 | 7.5 | 0 | 0 | 0 |
| | **(E) Water** | 600 | 600 | 600 | 600 | 600 | 600 | 600 | 600 |
| **Liquid Properties** | **Stability** | Δ | Δ | × | × | × | × | × | ×× |
| **Lubricating Film Forming Properties** | **Coefficient of Friction (ABS)** | **Not Measurable** | | | | | | | |
| | **Cross-Cut Adhesion Substrate: ABS (Upper) Substrate: SPCC Steel Sheet (Lower)** | | | | | | | | |

## Claims

1. An aqueous coating agent composition, comprising:
(A) a curable resin in the form of an aqueous emulsion;
(B) a surfactant;
(C) solid particles;
(D) one or more nitrogen-containing heterocyclic compounds; and
(E) water;
wherein the component (B) contains an anionic surfactant different from a surfactant used for the emulsion formation of the component (A), and the component (D) is 1,3-dimethyl-2-imidazolidinone.

2. The aqueous coating agent composition according to claim 1, containing, with respect to 100 as the product mass of solid content of the component (A), 0. 1 to 50 parts by mass of the component (B), 5 to 200 parts by mass of the component (C), 1 to 20 parts by mass of the component (D), and 50 to 1000 parts by mass of the component (E).

3. The aqueous coating agent composition according to any one of claims 1 or 2, wherein the component (A) is a polyacryl resin, a polyurethane resin, a polyolefin resin, an epoxy resin, a silicone resin, a polyamide-imide resin, in the form of an aqueous emulsion, or a modified product thereof or a mixture thereof.

4. The aqueous coating agent composition according to any one of claims 1 to 3, wherein at least part of the component (C) is a solid lubricant.

5. The aqueous coating agent composition according to any one of claims 1 to 4, wherein the component (C) contains a solid lubricant selected from a fluorine resin, a polyethylene resin, a polyamide resin, molybdenum disulfide, graphite, aluminum oxide, boron nitride, zinc oxide, or a mixture thereof.

6. An aqueous lubricating film paint composition, comprising: an aqueous coating agent composition according to any one of claims 1 to 5.

7. Use of an aqueous coating agent composition according to any one of claims 1 to 5 as an aqueous lubricating film paint composition.

8. A coating film, obtained by curing an aqueous coating agent composition according to any one of claims 1 to 5.

9. A member provided with a coating film, obtained by curing an aqueous coating agent composition according to any one of claims 1 to 5.

10. Use of a coating film according to claim 8 as a lubricating film.

11. A member according to claim 9, which is a sliding member.

12. A method forforming a coating film on a substrate surface, comprising: applying an aqueous coating agent composition according to any one of claims 1 to 5 onto a substrate surface; and drying and/or irradiating it with high energy rays.

## Patentansprüche

1. Wässrige Beschichtungsmittelzusammensetzung, umfassend:
(A) ein aushärtbares Harz in Form einer wässrigen Emulsion;
(B) ein Tensid;
(C) Feststoffteilchen;
(D) eine oder mehrere stickstoffhaltige heterocyclischen Verbindungen; und
(E) Wasser;
wobei die Komponente (B) ein anionisches Tensid enthält, das von einem Tensid, das für die Emulsionsbildung der Komponente (A) verwendet wird, verschieden ist, und die Komponente (D) 1,3-Dimethyl-2-imidazolidinon ist.

2. Wässrige Beschichtungsmittelzusammensetzung nach Anspruch 1, die mit Bezug auf 100 als Produktmasse des Feststoffgehalts der Komponente (A) 0,1 bis 50 Masseteile der Komponente (B), 5 bis 200 Masseteile der Komponente (C), 1 bis 20 Masseteile der Komponente (D) und 50 bis 1000 Masseteile der Komponente (E) enthält.

3. Wässrige Beschichtungsmittelzusammensetzung nach einem der Ansprüche 1 oder 2, wobei die Komponente (A) ein Polyacrylharz, ein Polyurethanharz, ein Polyolefinharz, ein Epoxidharz, ein Siliconharz, eine Polyamidimidharz in Form einer wässrigen Emulsion oder ein modifiziertes Produkt davon oder eine Mischung davon ist.

4. Wässrige Beschichtungsmittelzusammensetzung nach einem der Ansprüche 1 bis 3, wobei mindestens ein Teil der Komponente (C) ein festes Gleitmittel ist.

5. Wässrige Beschichtungsmittelzusammensetzung nach einem der Ansprüche 1 bis 4, wobei die Komponente (C) ein festes Gleitmittel enthält, ausgewählt unter einem Fluorharz, einem Polyethylenharz, einem Polyamidharz, Molybdändisulfid, Graphit, Aluminiumoxid, Bornitrid, Zinkoxid oder einer Mischung davon.

6. Wässrige Gleitfilm-Anstrichmittelzusammensetzung, umfassend: eine wässrige Beschichtungsmittelzusammensetzung nach einem der Ansprüche 1 bis 5.

7. Verwendung einer wässrigen Beschichtungsmittelzusammensetzung nach einem der Ansprüche 1 bis 5 als wässrige Gleitfilm-Anstrichmittelzusammensetzung.

8. Beschichtungsfilm, der durch Aushärten einer wässrigen Beschichtungsmittelzusammensetzung nach einem der Ansprüche 1 bis 5 erhalten wird.

9. Element, das mit einem Beschichtungsfilm versehen und durch Aushärten einer wässrigen Beschichtungsmittelzusammensetzung nach einem der Ansprüche 1 bis 5 erhalten wird.

10. Verwendung eines Beschichtungsfilms nach Anspruch 8 als Gleitfilm.

11. Element nach Anspruch 9, das ein gleitendes Element ist.

12. Verfahren zum Bilden eines Beschichtungsfilms auf einer Substratoberfläche, umfassend: Auftragen einer wässrigen Beschichtungsmittelzusammensetzung nach einem der Ansprüche 1 bis 5 auf eine Substratoberfläche; und deren Trocknen und/oder Bestrahlen mit Hochenergiestrahlen.

## Revendications

1. Composition aqueuse d'agent de revêtement, comprenant:
(A) une résine durcissable sous la forme d'une émulsion aqueuse;
(B) un tensioactif;
(C) des particules solides;
(D) un ou plusieurs composés hétérocycliques contenant de l'azote; et
(E) de l'eau;
le composant (B) contenant un tensioactif anionique différent d'un tensioactif utilisé pour la formation d'émulsion du composant (A), et le composant (D) étant la 1,3-diméthyl-2-imidazolidinone.

2. Composition aqueuse d'agent de revêtement selon la revendication 1, contenant, par rapport à 100 comme masse de produit de la teneur en matières solides du composant (A), de 0,1 à 50 parties en masse du composant (B), de 5 à 200 parties en masse du composant (C), de 1 à 20 parties en masse du composant (D), et de 50 à 1 000 parties en masse du composant (E).

3. Composition aqueuse d'agent de revêtement selon l'une quelconque des revendications 1 ou 2, le composant (A) étant une résine de polyacryle, une résine de polyuréthane, une résine de polyoléfine, une résine époxy, une résine de silicone, une résine de polyamide-imide, sous la forme d'une émulsion aqueuse, ou son produit modifié ou son mélange.

4. Composition aqueuse d'agent de revêtement selon l'une quelconque des revendications 1 à 3, au moins une partie du composant (C) étant un lubrifiant solide.

5. Composition aqueuse d'agent de revêtement selon l'une quelconque des revendications 1 à 4, le composant (C) contenant un lubrifiant solide sélectionné parmi une résine fluorée, une résine de polyéthylène, une résine de polyamide, le disulfure de molybdène, le graphite, l'oxyde d'aluminium, le nitrure de bore, l'oxyde de zinc, ou un mélange de ceux-ci.

6. Composition aqueuse de peinture de film lubrifiant, comprenant: une composition aqueuse d'agent de revêtement selon l'une quelconque des revendications 1 à 5.

7. Utilisation d'une composition aqueuse d'agent de revêtement selon l'une quelconque des revendications 1 à 5 comme composition aqueuse de peinture de film lubrifiant.

8. Film de revêtement, obtenu par durcissement d'une composition aqueuse d'agent de revêtement selon l'une quelconque des revendications 1 à 5.

9. Élément pourvu d'un film de revêtement, obtenu par durcissement d'une composition aqueuse d'agent de revêtement selon l'une quelconque des revendications 1 à 5.

10. Utilisation d'un film de revêtement selon la revendication 8 comme film lubrifiant.

11. Élément selon la revendication 9, qui est un élément coulissant.

12. Procédé de formation d'un film de revêtement sur une surface de substrat, comprenant: l'application d'une composition aqueuse d'agent de revêtement selon l'une quelconque des revendications 1 à 5 sur une surface de substrat; et son séchage et/ou son irradiation avec des rayons de haute énergie.
